# EUROPÄISCHE PATENTSCHRIFT

(11) **EP 1 017 627 B1**
(45) Veröffentlichungstag und Bekanntmachung des Hinweises auf die Patenterteilung: **11.09.2002**
(21) Anmeldenummer: 98909421.4
(22) Anmeldetag: 09.02.1998
(51) Int. Cl.: C01G 53/00, C01G 51/00, C01G 45/00, H01M 4/48

(54) **VERFAHREN ZUR HERSTELLUNG VON LITHIUM-ÜBERGANGSMETALLATEN**
METHOD FOR PRODUCING LITHIUM TRANSITION METALATES
PROCEDE DE PRODUCTION DE METALLATES CONSTITUES DE METAUX DE TRANSITION ET DE LITHIUM

(30) Priorität: 19.02.1997 DE 19706343; 21.02.1997 DE 19707050
(43) Veröffentlichungstag der Anmeldung: 12.07.2000
(73) Patentinhaber: H.C. Starck GmbH, 38642 Goslar (DE)
(72) Erfinder: KRYNITZ, Ulrich, D-38640 Goslar (DE); KUMMER, Wolfgang, D-38642 Goslar (DE); BENZ, Mathias, D-51427 Bergisch Gladbach (DE); MEESE-MARKTSCHEFFEL, Juliane, D-38640 Goslar (DE); PROSS, Evelyn, D-79774 Albbruck (DE); STOLLER, Viktor, D-38667 Harzburg (DE)
(74) Vertreter: Zobel, Manfred, Dr.
(86) Internationale Anmeldenummer: EP9800697
(87) Internationale Veröffentlichungsnummer: WO98037023

(56) Entgegenhaltungen:
- EP-A- 0 643 430
- CHEMICAL ABSTRACTS, vol. 121, no. 22, 28.November 1994 Columbus, Ohio, US; abstract no. 259745, KAGAWA: XP002068274 & JP 06 223 831 A (FUJI PHOTO) 12.August 1994
- CHEMICAL ABSTRACTS, vol. 118, no. 6, 8.Februar 1993 Columbus, Ohio, US; abstract no. 42357, MISHIMA: XP002068275 & JP 04 253 161 A (YUASA BATTERY) 8.September 1992

## Beschreibung

Die vorliegende Erfindung betrifft ein Verfahren zur Herstellung von Lithium-Übergangsmetallaten der allgemeinen Formel

Liₓ(M¹ _{y}M² _{1-y})ₙO_{nz},

wobei
- M¹: Nickel, Cobalt oder Mangan bedeutet,
- M²: ein von M¹ unterschiedliches Übergangsmetall bezeichnet und Chrom, Cobalt, Eisen, Mangan, Molybdän und/oder Aluminium bedeutet,
- n: gleich 2 ist, falls M¹ Mangan ist und n gleich 1 ist, falls M¹ Nickel oder Cobalt ist, wobei
- x: einen Wert von 0,9 bis 1,2 annimmt,
- y: einen Wert zwischen 0,5 und 1 annimmt und
- z: einen Wert zwischen 1,9 und 2,1 annimmt.

Derartige Lithium-Übergangsmetallate werden als Elektrodenmaterial, insbesondere als Kathodenmaterial für nicht-wässrige Lithium-Sekundärbatteriesysteme, sogenannte Lithium-lonenbatterien, eingesetzt.

Es hat bereits eine Vielzahl von Vorschlägen zur Herstellung derartiger Lithium-Übergangsmetallate gegeben, die aber überwiegend für eine großtechnische Herstellung nicht geeignet sind oder zu Produkten führen, die mangelhafte elektrochemische Eigenschaften aufweisen.

Durchgesetzt hat sich in den letzten Jahren die Verwendung von LiCoO₂, das aber durch die begrenzte Verfügbarkeit und den damit zusammenhängenden hohen Preis von Cobalt extrem teuer ist und damit für eine Massenproduktion (z.B. für den elektrischen Antrieb von Fahrzeugen) nicht infrage kommt. Deshalb gab es bereits intensive Bemühungen, LiCoO₂ als Kathodenmaterial z.B. durch LiNiO₂ und/oder LiMn₂O₄ ganz oder teilweise zu ersetzen.

Die Synthese der entsprechenden Kobalt-Verbindung LiCoO₂ gilt allgemein als unkritisch. Aufgrund der thermischen Stabilität von LiCoO₂, ist es bei diesem System sogar möglich, Kobaltcarbonat und Lithiumcarbonat direkt als Reaktionskomponenten bei relativ hohen Temperaturen umzusetzen, ohne daß im Endprodukt störende Carbonat-Gehalte verbleiben.

Die Übertragung dieser Methode auf LiNiO₂, wäre nur bei Temperaturen von 800 bis 900°C möglich. Derartig hohe Calzinationstemperaturen führen jedoch zu partiell zersetzten Lithiumnickelaten mit relativ geringer Speicherkapazität und/oder unbefriedigender Zyklenbeständigkeit.

Aus diesem Grund werden für die Herstellung von LiNiO₂ carbonatfreie Mischungen vorgeschlagen, bei denen als Nickelkomponente in den meisten Fällen β-Nickelhydroxid favorisiert wird, wie z.B. beschrieben in US-A 5 591 548, EP 0 701 293, J. Power Sources 54 (95) 209-213, 54 (95) 329-333 sowie 54 (95) 522-524. Darüber hinaus wurde auch der Einsatz von Nickeloxid in JP-A 7 105 950 oder Oxynickelhydroxid NiOOH in der DE-A 196 16 861 empfohlen.

Gemäß US-A 4.567.031 erfolgt die Präparation der innigen Mischung durch Copräzipitation von löslichen Lithium- und Übergangsmetallsalzen aus der Lösung, Trocknung der Lösung und Calzinierung. Hierbei werden bei vergleichsweise niedrigen Calzinierungstemperaturen und innerhalb vergleichsweise kurzer Zeiten relativ feinteilige Kristalle der Lithiumübergangsmetallate erhalten. Die Zuordnung der Lithium- und Übergangsmetallionen zu den jeweiligen Schichten des Kristallgitters ist jedoch stark gestört, so daß Lithiumionen in großem Umfang Nickelschichtgitterplätze einnehmen und umgekehrt. Derartige Kristalle haben unzureichende Eigenschaften im Hinblick auf ihren Einsatz als Elektroden in wiederaufladbaren Batterien. Andere Verfahren (EP-A 205 856, EP-A 243 926, EP-A 345 707) gehen von festen, feinteiligen Carbonaten, Oxiden, Peroxiden oder Hydroxiden der Ausgangsmetalle aus. Die innige Mischung wird durch gemeinsames Vermahlen der Ausgangsmetalle hergestellt. Die Bildung der Lithium-Übergangsmetallate erfolgt durch Festkörperdiffusion während der Calzination. Die Festkörperdiffusion erfordert vergleichsweise hohe Temperaturen bei vergleichsweise langen Calzinationszeiten und führte in der Regel nicht zu phasenreinen Lithiummetallaten mit hervorragenden elektronischen Eigenschaften. Umfangreiche Beobachtungen scheinen zu belegen, dass im Falle des Nickelsystems bei einer längeren Temperaturbehandlung oberhalb größenordnungsmäßig 700°C eine Zersetzung von LiNiO₂ unter Bildung von Li₂O und NiO beginnt.

Zur Intensivierung der innigen Mischung wurde daher bereits gemäß EP-A 468 942 vorgeschlagen, bei der Herstellung von Lithiumnickelat von pulverförmigem Nickeloxid oder -hydroxid auszugehen, das Pulver in einer gesättigten Lithiumhydroxidlösung zu suspendieren und der Suspension das Wasser durch Sprühtrocknen zu entziehen. Hierdurch soll die Calzinierungs-Zeit bzw. -Temperatur herabgesetzt werden können. Wegen der relativ geringen Löslichkeit von Lithiumhydroxid in Wasser ist die Homogenität dieser Mischung aber begrenzt.

Gemäß US-A 5.591.548 wird vorgeschlagen, eine pulverförmige sauerstoffhaltige Übergangsmetallverbindung mit Lithiumnitrat zu vermahlen und anschließend unter Inertgas zu calzinieren. Der Vorteil dieses Verfahrens liegt in dem niedrigen Schmelzpunkt des Lithiumnitrats von 264°C, was dazu führt, dass die innige Mischung nach Erhitzen auf beispielsweise 300°C in Form einer Suspension der Übergangsmetallverbindungsteilchen in einer Lithiumnitratschmelze vorliegt, wodurch die Reaktion mit dem Festkörper begünstigt wird.

Nachteilig bei diesem Verfahren ist, dass während der Calzinierung freigesetzte Gase (H₂O, NOₓ, O₂) nicht oder nur sehr langsam aus der zähflüssigen Schmelzesuspension entweichen, so dass der für die Festkörperreaktion und Diffusion erforderliche innige

Kontakt gestört wird und andererseits Konzentrationsinhomogenitäten im geometrischen Abstand nur weniger suspendierter Partikel auftreten. Entsprechend sind Unterbrechungen der Glühung und Zwischenmahlungen zur Homogenisierung der Reaktionsmasse erforderlich.

Erfindungsgemäß wird nun vorgeschlagen, die Calzinierung zumindest zeitweise unter einem zumindest partiellen Vakuum durchzuführen. Hierdurch wird eine signifikante Absenkung der Reaktionszeiten und erforderlichen Temperaturen erzielt.

Gegenstand der vorliegenden Erfindung ist daher ein Verfahren zur Herstellung von Lithiumübergangsmetallaten der allgemeinen Formel

Liₓ(M¹ _{y}M² _{1-y})ₙO_{nz},

wobei
- M¹: Nickel, Cobalt oder Mangan bedeutet,
- M²: ein von M¹ unterschiedliches Übergangsmetall bezeichnet und Chrom, Cobalt, Eisen, Mangan, Molybdän und/oder Aluminium bedeutet,
- n: gleich 2 ist, falls M¹ Mangan ist und n gleich 1 ist, falls M¹ Nickel oder Cobalt ist, wobei
- x: einen Wert von 0,9 bis 1,2 annimmt,
- y: einen Wert zwischen 0,5 und 10 annimmt und
- z: einen Wert zwischen 1,9 und 2,1 annimmt,

durch Herstellung einer innigen Mischung von feinteiligen sauerstoffhaltigen Verbindungen der Übergangsmetalle und einer oder mehrerer sauerstoffhaltiger Lithiumverbindungen sowie Calzinierung der Mischung in einem Reaktor, das dadurch gekennzeichnet ist, daß die Calzinierung zumindest zeitweise unter einem absoluten Druck von weniger als 0,5 bar absolut erfolgt.

Vorzugsweise weist mindestens eine der Lithiumverbindungen einen Schmelzpunkt von weniger als 600°C auf, insbesondere bevorzugt mindestens 90 % der eingesetzten Lithiumverbindungen.

Vorzugsweise wird die Calzinierung zumindest zeitweise bei einem partiellen Vakuum entsprechend einem Druck von 0,01 bis 0,4 bar absolut, insbesondere bevorzugt bei einem Druck von0,01 bis 0,2 bar absolut, durchgeführt.

Es ist weiter bevorzugt, die Calzination zunächst bei Normaldruck zu beginnen, so daß es aufgrund der Gasfreisetzungsreaktion zur Übersättigung der Schmelze der Lithiumverbindung an gelöstem Gas und zur Ausbildung mindestens noch substabiler Blasenkeime im Bereich von einigen Mikrometern Durchmesser unter Normaldruck kommt. Dies kann bei industriellen Ansätzen während eines Zeitraumes von 2 bis 12 Stunden erfolgen, im Falle, daß als Übergangsmetallverbindungen Oxide eingesetzt werden, auch über einen längeren Zeitraum. Bevorzugt wird der Reaktor erst nach dieser anfänglichen Calzinierungsstufe bei Normaldruck, gegebenenfalls auch stufenweise, evakuiert, so daß die bereits vorhandenen Blasenkeime einerseits ihr Volumen durch Druckreduktion vergrößern und andererseits die Übersättigung der Schmelze an gelöstem Gas und damit der Diffusionsdruck der gelösten Gasmoleküle in Richtung auf die Gasblasen erhöht wird. Die derart vergrößerten Gasblasen, die ein mehrfaches des Volumens der suspendierten Feststoffteilchen aufweisen, berühren sich gegenseitig, koagulieren und steigen in der Schmelzesuspension auf bis sie an der Oberfläche der Suspension an die Reaktoratmosphäre abgegeben werden. Die dadurch bewirkte Bewegung der Schmelzesuspension im Nahbereich führt zu einer Homogenisierung der Reaktionsmischung, die nach dem Stand der Technik nur durch Abkühlen der Reaktionsmischung, Vermahlen, und Wiedereinführung in den Reaktor zur weiteren Temperaturbehandlung erzielt werden kann.

Wenn die Gasfreisetzungsreaktion im wesentlichen beendet ist, beispielsweise mehr als 99 % des freisetzbaren Gases freigesetzt ist, wird erfindungsgemäß bevorzugt die weitere Calzination bei Normaldruck fortgesetzt. Die Reaktion wird in dieser dritten Calzinierungsstufe durch Festkörperdiffusion vervollkommnet und mögliche Gitterfehlstellen, die z.B. auch von der mechanischen Belastung im partiellen Vakuum herrühren können, heilen aus. Das Reaktionsprodukt liegt in dieser dritten Stufe als poröser, weitgehend offenporiger "Kuchen" vor.

Erforderlichenfalls kann die dritte Stufe durch eine homogenisierende Zwischenmahlung unterbrochen werden. Dies ist aber in der Regel nicht erforderlich, sofern bei der Vorstoffherstellung nach dem hier beschriebenen Verfahren sauerstoffhaltige Übergangsmetallverbindungen mit einer großen, möglichst 50 m²/g übersteigenden, Oberfläche Verwendung gefunden haben. In diesem Fall behält die Reaktionsmischung über sämtliche Stufen ihre Homogenität.

Erfindungsgemäß weiter bevorzugt wird zur schnellen Ausschleusung der durch die Reaktion freigesetzten Gase vorzugsweise in allen drei Calzinierungsstufen, insbesondere aber in der Vakuumcalzinierungsstufe, Spülgas durch den Reaktor geleitet. Zur Vermeidung von Temperaturinhomogenitäten im Reaktor wird der Spülgasstrom vorzugsweise so bemessen, dass im Reaktor eine geringe Spülgasströmung, beispielsweise weniger als 1 cm/sec., bezogen auf Normalbedingungen, herrscht.

Vorzugsweise werden als Spülgase während der ersten und zweiten Reaktionsstufe Inertgase (N₂, Ar, He), Wasserdampf, CO₂-arme Luft und/oder Sauerstoff verwendet.

Als Spülgase während der dritten Reaktionsstufe werden bevorzugt Sauerstoff, Inertgas und/oder Luft verwendet.

Der Übergang von Stufe zu Stufe kann gleitend vollzogen werden und beispielsweise entsprechend der Zusammensetzung der Reaktionsgase geregelt werden.

Der erfindungsgemäße, reaktionsbeschleunigende und homogenisierende Effekt des Vakuums kann dadurch noch verstärkt werden, dass das Vakuum pulsierend gefahren wird, beispielsweise bei einem Takt von 1 bis 15 Minuten, insbesondere bevorzugt bei einem Takt von 5 bis 15 Minuten. Die Druckschwankungen des pulsierenden Vakuum bewirken ein "Atmen" der in der Schmelzesuspension eingeschlossenen Gasblasen und damit eine Bewegung und Homogenisierung im Nahbereich in der Reaktionsmischung. Das pulsierende Vakuum wird bevorzugt durch ein Innendruckgesteuertes Ventil zur Vakuumpumpe bei gleichzeitiger Einleitung von Spülgas erzeugt.

Bevorzugte sauerstoffhaltige Lithiumverbindungen mit einem Schmelzpunkt unterhalb 600°C sind Lithiumhydroxid mit einem Schmelzpunkt von 450°C, Lithiumnitrat mit einem Schmelzpunkt von 264°C, Mischungen von Lithiumhydroxid und Lithiumnitrat oder Lithiumnitrathydrate.

Vorzugsweise werden Übergangsmetallverbindungen eingesetzt, die entweder oxidisch sind oder bei der Zersetzung Wasser abgespalten.

Erfindungsgemäß bevorzugte sauerstoffhaltige Übergangsmetallverbindungen sind die Hydroxide, da diese bereits ein rhomboedrisches Gitter mit geschichteten Atomlagen bereitstellen, in das die Lithiumionen nach Abgabe von Wasser aus den Hydroxidkristallen unter Ausbildung weitgehend sortenreiner Schichten eindiffundieren kann. Aufgrund ihrer geringen Reaktivität werden Übergangsmetalloxide weniger bevorzugt eingesetzt. Jedoch ist ihre Verwendung im Rahmen der vorliegenden Erfindung nicht ausgeschlossen, insbesondere wenn Oxide mit sehr großer spezifischer Oberfläche eingesetzt werden. Ferner sind Carbonate, Hydroxycarbonate und Nitrate, gegebenenfalls auch kristallwasserhaltig, erfindungsgemäß geeignet.

Vorzugsweise weisen die Übergangsmetallverbindungen eine spezifische Oberfläche von mehr als 5 m²/g nach BET auf, besonders bevorzugt mehr als 10 m²/g, insbesondere bevorzugt mehr als 50 m²/g.

Bevorzugte Übergangsmetalle M¹ sind Nickel und Mangan, insbesondere in Form ihrer Hydroxide, besonders bevorzugt solche mit einer spezifischen Oberfläche von mehr als 5 m²/g, insbesondere bevorzugt von mehr als 20 m²/g, ganz besonders bevorzugt von mehr als 50 m²/g, gemessen nach BET.

Im Falle von M¹ = Ni wird als Reaktionskomponente β-Nickelhydroxid, hergestellt nach US 5 391 265/DE 42 29 295 besonders bevorzugt, da dies BET-Oberflächen von 65 ibs 80 m²/g aufweist und in der Lage ist, die konzentrierte Lithiumlösung vollständig zu absorbieren.

Bei Verwendung von Oxiden oder Hydroxiden mit einer deutlich geringeren Oberfläche, z.B. sphärischem β-Nickelhydroxid mit einer Oberfläche von weniger als 5 m²/g, sedimentiert bei der Festkörperreaktion ein Teil des gebildeten Nickeloxids im geschmolzenen Lithiumnitrat oder Lithiumhydroxid. Die Reaktionsmischung wird inhomogen und es werden ohne homogenisierende Zwischenmahlungen keine phasenreinen Lithiummetallate erhalten.

Die pulverförmigen Lithium- und Übergangsmetallverbindungen werden vor ihrem Einsatz in dem Reaktor in an sich bekannter Weise gemeinsam vermahlen und zur Vermeidung des Staubens und der Segregation vorzugsweise zu Tabletten verpreßt, um einerseits die Dichte zu erhöhen, d.h. die Diffüsionswege zu verkürzen, und andererseits eine gut gasdurchlässige Schüttung zu erzeugen. Bevorzugt wird die innige Mischung anstelle durch Vermahlen durch Suspendierung der pulverförmigen Übergangsmetallverbindung in einer konzentrierten Lösung der Lithiumverbindung mit anschließendem Wasserentzug erzeugt und anschließend tablettiert oder pelletisiert.

Vorzugsweise wird eine LiNO₃-Lösung oder Lithiumnitrathydrat-Salzschmelze mit einem LiNO₃-Gehalt von 50 bis 80 % eingesetzt. Darin werden die berechneten Mengen der Übergangsmetall-Verbindungen eingerührt und unter Bewegung bei 120 bis 200°C pelletisierend, beispielsweise in einem beheizten Mischer, getrocknet oder sprühgetrocknet. Die vollständige Trocknung ist u.a. dadurch erkennbar, dass beim nachfolgenden Erwärmen im Reaktor kein Lithiumnitrat "ausblüht".

Das erfindungsgemäß besonders bevorzugte Verfahren geht von Lithiumhydroxid, Lithiumhydroxidhydrat, Lithiumoxid oder Lithiumcarbonat oder deren Mischungen als Ausgangsstoffe für die Lithiumkomponente aus. Die Ausgangsstoffe werden vorsichtig in vorzugsweise konzentrierte Salpetersäure eingetragen. Salpetersäure wird dabei leicht überstöchiometrisch eingesetzt, um gegebenenfalls vorhandene Carbonat-Restgehalte sicher auszutreiben.

Praktisch wird bevorzugt so verfahren, dass die Lithium-Ausgangsstoffe in die konzentrierte Salpetersäure eingetragen werden bis der pH-Wert der Lösung 7 übersteigt. Anschließend wird mit Salpetersäure bis pH 3,0 angesäuert. Weiter bevorzugt wird die erhaltene Lösung bei 120 bis 170°C, gegebenenfalls unter partiellem Vakuum, eingedampft, wobei in der Lösung bzw. Salzschmelze ein LiNO₃-Gehalt von 50 bis 80 % anzustreben ist. Danach werden die berechneten Mengen von Übergangsmetall-Verbindungenn eingerührt und unter Bewegung bei 120 bis 200°C pelletisierend getrocknet oder sprühgetrocknet.

Da bei der Calcination dieser Ausgangsmischung u.a. nitrose Gase entstehen, ist es bevorzugt, diese aus dem Abgas herauszuwaschen und vorzugsweise direkt zu konzentrierter Salpetersäure zu konventieren. Diese Salpetersäure wird dann im Sinne eines vollständigen Recyclings erfindungsgemäß wieder zur Herstellung von frischer Lithiumnitratlösung verwendet.

Vorzugsweise wird das bei der Calzination freigesetzte NOₓ zu Salpetersäure umgesetzt, konzentriert und zum Lösen von Lithiumcarbonat und/oder Lithiumhydroxid eingesetzt.

Das erfindungsgemäße Verfahren zur Herstellung der innigen Mischung ist auch dann von großem Vorteil, wenn andere als erfindungsgemäße Bedingungen bei der Calzination herrschen.

Die Calzinierungstemperaturen bei der Herstellung von gegebenenfalls durch M²-Gehalte modifiziertem Lithiumnickelat liegen vorzugsweise zwischen 550 und 700°C. Im Falle der bevorzugten dreistufigen Calzinierung beträgt die Calzinierungstemperatur vorzugsweise 580 bis 680°C, besonders bevorzugt 600 bis 650°C, wobei die Temperatur insbesondere bevorzugt über den gesamten Reaktionsverlauf um insgesamt 10 bis 30°C erhöht wird. Im Falle der Herstellung von Lithiummanganat werden Temperaturen bevorzugt, die 50 bis 100°C oberhalb der für Lithiumnickelat angegebenen Temperaturen liegen.

Die Calcination kann im statischen Bett, vorzugsweise mit einer Schütthöhe des Bettes von unterhalb 100mm durchgeführt werden. Vorteilhaft kann auch ein bewegtes Bett, z.B. ein Drehrohrofen für die Calcination eingesetzt werden.

Die Auswahl der verwendeten Spül- und Transportgase hängt von den eingesetzten Reaktionskomponenten ab: sofern M²⁺-Verbindungen mit nicht oxidierenden Lithiumverbindungen, z.B. Lithiumhydroxid oder Lithiumcarbonat, reagieren sollen, ist die Verwendung eines sauerstoffhaltigen Spülgases zwingend erforderlich. Vor zugsweise werden in diesem Fall N₂/O₂-Mischungen oder Ar/O₂-Mischungen verwendet, wobei der O₂-Anteil 20 bis 80 %, insbesondere bevorzugt 30 bis 50 % betragen soll. Alternativ ist auch die Verwendung von Luft, vorzugsweise CO₂-armer Luft, bzw. eine Mischung von Luft und Sauerstoff möglich.

Bei der Verwendung von Lithiumnitrat bildet sich der für die Oxidation von M²⁺ zu M³⁺ erforderliche Sauerstoff in hinreichenden Mengen durch den Zerfall des bei der Reaktion entstehenden NOₓ, so daß kein weiterer Sauerstoff zugeführt werden muß. In diesem Fall werden als Spülgase in der ersten und zweiten Stufe vorzugsweise Argon, Stickstoff und/oder Wasserdampf verwendet. Für die dritte Reaktionsstufe (unter Normaldruck) ist dann wieder ein gewisser O₂-Gehalt im Spülgas erforderlich. Die Verwendung von Wasserdampf als Spülgas wird in der dritten Stufe ausdrücklich nicht empfohlen.

Obwohl die Erfindung bezüglich ihrer besonderen Vorteile für den Einsatz von niedrigschmelzenden Lithiumverbindungen beschrieben wurde, ist für den Fachmann ohne weiteres erkennbar, daß eine Unterdruck-Calcinierung wegen der effektiven Ableitung von gasförmigen Abspaltprodukten auch bei Einsatz von nicht schmelzenden Reaktionspartner, z.B. einer Mischung von Oxiden und/oder Carbonaten; vorteilhaft ist.

### Beispiele

### Beispiel 1

1,02 Mol LiOH x H₂O wurden in 1,03 Mol konzentrierter HNO₃ vorsichtig gelöst. In diese Lösung wurden 1,00 Mol sphärischer β-Ni(OH)₂, welches nach dem Beispiel aus der DE 4 342 620 C1 (18,5 m²/g) BET hergestellt wurde, eingerührt. Anschließend wurde die Suspension bei 150°C getrocknet und homogenisiert.

Das Reaktionsgemisch wurde bei 320°C unter Stickstoff 8 Stunden getempert und anschließend gemahlen und homogenisiert.

Das Gemisch wurde dann langsam (Temp.-Steigerung 2°/min) weiter erwärmt und schließlich 24 Stunden bei 610°C in einer Atmosphäre von 90 % Ar/10 % O₂ geglüht, abgekühlt, danach gemahlen und homogenisiert

Anschließend wurde das Material nochmals 12 Stunden bei 670°C unter O₂ getempert.

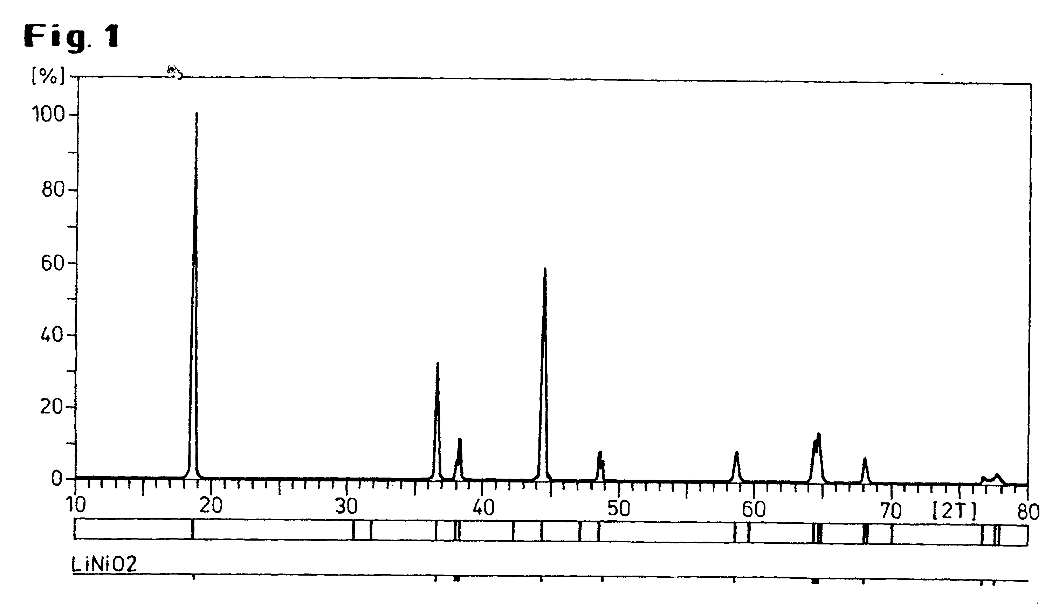

Das Röntgen-Beugungsspektrum zeigt ein phasenreines LiNiO₂ (Fig. 1).

### Beispiel 2

Ein Mol sphärisches Nickeloxid (NiO), hergestellt durch Kalzination bei 280°C von sphärischem Nickelhydroxid Ni(OH)₂, welches nach dem Beispiel aus der DE 4 342 620 C1 hergestellt wurde, wurde mit 1,05 Mol LiOH x H₂O gemischt und in einer Kugelmühle intensiv vermahlen. Die Mischung wurde 24 Stunden bei 500°C unter 50 % Ar/50 % O₂ geglüht, danach gemahlen und homogenisiert. Anschließend wurde nochmals 24 h bei 680°C unter 50 % Ar/50 % O₂ geglüht und das resultierende Produkt vermahlen.

Das Röntgenbeugungsspektrum zeigt, daß unter diesen Bedingungen noch kein phasenreines LiNiO₂ entstanden war. Dies wurde erst erhalten, nachdem nochmals 24 h bei 700°C unter O₂ nachbehandelt wurde.

### Beispiel 3

Ein Mol sphärisches Nickeloxid (NiO) gemäß Beispiel 2 wurde mit 1,05 Mol LiOH x H₂O, das vorher in siedendem Wasser gelöst worden war, imprägniert, bei 150°C getrocknet und homogenisiert. Die Mischung wurde analog Beispiel 2 thermisch behandelt mit dem Ergebnis, daß bereits nach 24 Stunden Glühung bei 680°C phasenreines LiNiO₂ entstanden war. Eine weitere Temperaturbehandlung war nicht erforderlich.

### Beispiel 4

101,0 Mol LiOH x H₂O wurden vorsichtig in 102,0 Mol konzentrierter HNO₃ gelöst. Anschließend wurde diese Lösung bei 140°C bis zu einer Dichte von 1,50 g/ml eingedampft. In die heiße Lösung bzw. Salzschmelze wurden 100,0 Mol reguläres Nickelhydroxid (hergestellt nach US 5 391 265/De 42 39 295, BET 73,4 m²/g) eingerührt. Die Suspension wurde in einem beheizten Mischer bei 150°C getrocknet und pelletisiert.

10 kg der so hergestellten Mischung wurden in einem gasdichten Rohrofen unter 100 l/h N₂ auf 600°C erhitzt und die Temperatur für 6 h gehalten.

Danach wurde die Temperatur auf 650°C gesteigert und es wurden 100 l/h N₂ in den Ofen als Spülgas eingeleitet.

Während bei vergleichbaren Ansätzen mit geringen Mengen (0,2 bis 1,0 kg) die Reaktion, sichtbar durch die Emission von NOₓ, etwa nach 12 bis 36 h vollständig abgeschlossen ist, zeigt sich bei diesem 10 kg-Ansatz_{,} daß auch nach 4 Tagen (96 h) noch ständig NOₓ entwickelt wird, d.h. die Reaktion noch nicht abgeschlossen ist.

Erst nach weiteren 50 h bei einer auf 685°C erhöhten Reaktionstemperatur ist die Reaktion sichtbar abgeschlossen, d.h. es ist keine NOₓ-Emission mehr erkennbar. Anschließend wurde nochmals für 6 Stunden unter 50 l/h N₂ und 50 l/h O₂ bei 640°C nachbehandelt.

Das resultierende Lithiumnickelat enthält noch 0,43 % NO₃- und im Röntgenbeugungsspektrum ist eine zweite Phase (Li₂O) erkennbar, entstanden durch einen partiellen Zerfall von LiNiO₂ während der extrem langen Reaktionszeit in Verbindung mit der relativ hohen Reaktionstemperatur.

### Beispiel 5

10 kg einer gemäß Beispiel 4 hergestellten innigen Vorstoffmischung wurden zunächst wieder bei 600°C für 6 h unter Normaldruck unter einer Atmosphäre 100 l/h N₂ und 20 l/h O₂ behandelt.

Danach wurde die Temperatur auf 640°C gesteigert und der Ofeninnendruck zunächst auf 0,5 bar, nach 30 Minuten dann auf 0,08 bar reduziert. Gleichzeitig wurden von der "Ofenrückseite" über eine Kapillare 100 l/h N₂ sowie 20 l/h O₂ eingespeist.

Nach etwa 16 h ist keine sichtbare NOₓ-Emission mehr erkennbar und die Vakuumpumpe wird abgeschaltet.

Nach weiteren 4 h Temperaturbehandlung unter Normaldruck (50 l/h N₂ plus 50 l/h O₂) bei 640°C ist die Reaktion vollständig beendet.

Das resultierende Lithiumnickelat enthält nur noch 18 ppm Nitrat und das Röntgenbcugungsspektrum (Fig. 2) zeigt, daß es sich um ein phasenreines Lithiumnickelat handelt.

Im Vergleich zu Beispiel 4 wurde die Reaktionszeit um insgesamt mehr als 70 % verkürzt und das Produkt war zu keinem Zeitpunkt Temperaturen über 640°C ausgesetzt worden.

### Beispiel 6

Die Versuchsbedingungen von Beispiel 5 wurden wiederholt, wobei jedoch während der ersten Glühstufe (6 g/600°C) und der zweiten Glühstufe (16 h/640°C/partielles Vakuum) vollständig auf die Zudosierung von Sauerstoff verzichtet wurde.

Das Ergebnis ist identisch mit dem von Beispiel 1, d.h. es wurde ein phasenreines LiNiO₂ erhalten, das nur noch 16 ppm Nitrat enthielt.

### Beispiel 7

Beispiel 6 wurde wiederholt, jedoch unter Verwendung eines "pulsierenden Vakuums" in der zweiten Reaktionsstufe. Dies wurde dadurch erreicht, daß ein in der Vakuumleitung installiertes automatisch arbeitendes Absperrventil so betätigt wurde, daß es bei Unterschreitung von 0,08 bar absolut (gemessen im Ofeninnenraum) die Vakuumleitung absperrte und bei Erreichen von 0,5 bar absolut wieder öffnete.

Der Druckaufbau im (vakuumdichten!) Ofeninnenraum erfolgte hierbei einerseits durch die kontinuierliche Emission von Reaktionsgasen aus der Reaktionsmischung, andererseits durch einen stetigen Spülgasstrom (N₂), über den eine Pulsierfrequenz von etwa 8 min eingestellt wurde.

Da bereits nach etwa 12 Stunden keine NOₓ-Bildung mehr erkennbar war, wurde das pulsierende Vakuum nach insgesamt 13 Stunden abgeschaltet und wie unter Beispiel 5 beschrieben nachbehandelt.

Das Ergebnis war identisch mit Beispiel 5 und Beispiel 6: es wurde ein phasenreines LiNiO₂ erhalten, jedoch bei nochmals verkürzter Reaktionszeit. Der Nitrat-Gehalt wurde mit 15 ppm bestimmt.

## Patentansprüche

1. Verfahren zur Herstellung von Lithium-Übergangsmetallaten der allgemeinen Formel
Liₓ(M¹ _{y}M² _{1-y})ₙO_{nz},
wobei
M¹ Nickel, Cobalt oder Mangan bedeutet,
M² Chrom, Cobalt, Eisen, Mangan, Molybdän oder Aluminium bedeutet und ungleich M¹ ist,
n gleich 2 ist falls M¹ = Mn, sonst 1,
x eine Zahl zwischen 0,9 bis 1,2,
y eine Zahl zwischen 0,5 bis 1,0 und
z eine Zahl zwischen 1,9 bis 2,1 ist,
durch Herstellung einer innigen festen Mischung von sauerstoffhaltigen Verbindungen der Übergangsmetalle und sauerstoffhaltigen Lithiumverbindungen und Calzinieren der Mischung in einem Reaktor, **dadurch gekennzeichnet, dass** die Calzinierung zumindest teilweise unter einem Druck von weniger als 0,5 bar absolut erfolgt.

2. Verfahren nach Anspruch 1, **dadurch gekennzeichnet, dass** als Lithiumverbindungen solche mit einem Schmelzpunkt unterhalb 600°C eingesetzt werden.

3. Verfahren nach Anspruch 1 oder 2, **dadurch gekennzeichnet, dass** die Calzinierung zumindest zeitweise bei einem partiellen Vakuum entsprechend einem Druck von 0,01 bis 0,4 bar absolut erfolgt.

4. Verfahren nach einem der Ansprüche 1 bis 3, **dadurch gekennzeichnet, dass** die Calzinierung mehrstufig durchgeführt wird, wobei in der ersten Stufe Normaldruck, in der zweiten Stufe ein partielles Vakuum und in der dritten Stufe Normaldruck herrscht.

5. Verfahren nach einem der Ansprüche 1 bis 4, **dadurch gekennzeichnet, dass** das partielle Vakuum im Takt von 1 bis 15 Minuten pulsiert.

6. Verfahren nach einem der Ansprüche 1 bis 5, **dadurch gekennzeichnet, dass** während der Calzinierung Spülgas durch den Reaktor eingeleitet wird.

7. Verfahren nach einem der Ansprüche 1 bis 6, **dadurch gekennzeichnet, dass** die innige Mischung durch Imprägnieren von schwerlöslichen Übergangsmetallverbindungen mit hochkonzentrierter Lithiumnitratlösung mit anschließender Trocknung hergestellt wird.

8. Verfahren nach einem der Ansprüche 4 bis 6, **dadurch gekennzeichnet, dass** als Spülgase während der ersten und zweiten Reaktionsstufe Inertgase (N₂, Ar, He), Wasserdampf, CO₂-arme Luft und/oder Sauerstoff verwendet werden.

9. Verfahren nach einem der Ansprüche 4 bis 7, **dadurch gekennzeichnet, dass** als Spülgase während der dritten Reaktionsstufe Sauerstoff, Inertgas und/oder Luft verwendet werden.

10. Verfahren nach einem der Ansprüche 1 bis 9, **dadurch gekennzeichnet, dass** die Calzination im bewegten Bett durchgeführt wird.

11. Verfahren nach einem der Ansprüche 1 bis 10, **dadurch gekennzeichnet, dass** Übergangsmetallverbindungen eingesetzt werden, die entweder oxidisch sind oder aber bei der Zersetzung Wasser abspalten.

12. Verfahren nach einem der Ansprüche 1 bis 11, **dadurch gekennzeichnet, dass** die Übergangsmetallverbindungen eine spezifische Oberfläche von mehr als 10 m²/g nach BET aufweisen, vorzugsweise mehr als 50 m²/g.

13. Verfahren nach Anspruch 7, **dadurch gekennzeichnet, dass** das bei der Calzination freigesetzte NOₓ zu Salpetersäure umgesetzt wird und konzentriert und zum Lösen von Lithiumcarbonat und/oder Lithiumhydroxid eingesetzt wird.

## Claims

1. Process for preparing lithium transition metalates of the general formula
Liₓ(M¹ _{y}M² _{1-y})ₙO_{nz},
where
M¹ is nickel, cobalt or manganese,
M² is chromium, cobalt, iron, manganese, molybdenum or aluminium and is different from M¹,
n is 2 when M¹ = Mn, otherwise 1,
x is from 0.9 to 1.2,
y is from 0.5 to 1.0 and
z is from 1.9 to 2.1,
by preparing an intimate solid mixture of oxygen-containing compounds of the transition metals and oxygen-containing lithium compounds and calcining the mixture in a reactor, **characterized in that** the calcination is at least partly carried out under a pressure of less than 0.5 bar absolute.

2. Process according to Claim 1, **characterized in that** the lithium compounds used have a melting point above 600°C.

3. Process according to Claim 1 or 2, **characterized in that** the calcination is at least partly carried out under a partial vacuum corresponding to a pressure of from 0.01 to 0.4 bar absolute.

4. Process according to any of Claims 1 to 3, **characterized in that** the calcination is carried out in a plurality of stages, with the pressure in the first stage being atmospheric pressure, the second stage being carried out under a partial vacuum and the pressure in the third stage being atmospheric pressure.

5. Process according to any of Claims 1 to 4, **characterized in that** the partial vacuum cycles with a period of from 1 to 15 minutes.

6. Process according to any of Claims 1 to 5, **characterized in that** purge gas is passed through the reactor during the calcination.

7. Process according to any of Claims 1 to 6, **characterized in that** the intimate mixture is produced by impregnation of sparingly soluble transition metal compounds with highly concentrated lithium nitrate solution and subsequent drying.

8. Process according to any of Claims 4 to 6, **characterized in that** inert gases (N₂, Ar, He), steam, low-CO₂ air and/or oxygen are used as purge gases during the first and second reaction stages.

9. Process according to any of Claims 4 to 7, **characterized in that** oxygen, inert gas and/or air are used as purge gases during the third reaction stage.

10. Process according to any of Claims 1 to 9, **characterized in that** the calcination is carried out in a moving bed.

11. Process according to any of Claims 1 to 10, **characterized in that** the transition metal compounds used are either oxidic or else eliminate water on decomposition.

12. Process according to any of Claims 1 to 11, **characterized in that** the transition metal compounds have a specific surface area of more than 10 m²/g determined by the BET method, preferably more than 50 m²/g.

13. Process according to Claim 7, **characterized in that** the NOₓ liberated in the calcination is reacted to form nitric acid and concentrated and is used for dissolving lithium carbonate and/or lithium hydroxide.

## Revendications

1. Procédé pour la préparation de métallates de lithium et de métaux de transition de formule générale
Liₓ(M¹ _{y}M² _{1-y})ₙO_{nz}
dans laquelle
M¹ représente le nickel, le cobalt ou le manganèse,
M² représente le chrome, le cobalt, le fer, le manganèse, le molybdène et/ou l'aluminium, avec une signification autre que celle de M¹,
n est égal à 2 lorsque M¹ = Mn, sinon il est égal à 1,
x est un nombre allant de 0,9 à 1,2,
y est un nombre allant de 0,5 à 1,0 et
z est un nombre allant de 1,9 à 2,1,
par préparation d'un mélange solide intime de dérivés oxygénés de métaux de transition et de dérivés oxygénés de lithium et calcination du mélange dans un réacteur, **caractérisé en ce que** la calcination est réalisée en partie au moins sous une pression absolue inférieure à 0,5 bar.

2. Procédé selon la revendication 1, **caractérisé en ce que** les dérivés du lithium mis en oeuvre ont un point de fusion inférieur à 600°C.

3. Procédé selon la revendication 1 ou 2, **caractérisé en ce que** la calcination est réalisée en partie au moins sous un vide partiel correspondant à une pression absolue de 0,01 à 0,4 bar.

4. Procédé selon l'une des revendications 1 à 3, **caractérisé en ce que** la calcination est réalisée en plusieurs stades, le premier stade étant réalisé à pression normale, le deuxième stade sous une vide partiel et le troisième stade à pression normale.

5. Procédé selon l'une des revendications 1 à 4, **caractérisé en ce que** le vide partiel est soumis à des pulsations avec une cadence de 1 à 15 min.

6. Procédé selon l'une des revendications 1 à 5, **caractérisé en ce que**, durant la calcination, on injecte un gaz de balayage dans le réacteur.

7. Procédé selon l'une des revendication 1 à 6, **caractérisé en ce que** l'on forme le mélange intime par imprégnation de dérivés peu solubles de métaux de transition par une solution de nitrate de lithium à haute concentration en faisant suivre d'un séchage.

8. Procédé selon l'une des revendications 4 à 6, **caractérisé en ce que**, durant le premier et le deuxième stades de réaction, on utilise en tant que gaz de balayage des gaz inertes (N₂, Ar, He), la vapeur d'eau, de l'air appauvri en CO₂ et/ou de l'oxygène.

9. Procédé selon l'une des revendications 4 à 7, **caractérisé en ce que**, durant le troisième stade de réaction, on utilise en tant que gaz de balayage l'oxygène, des gaz inertes et/ou l'air.

10. Procédé selon l'une des revendications 1 à 9, **caractérisé en ce que** la calcination est réalisée en lit mobile.

11. Procédé selon l'une des revendications 1 à 10, **caractérisé en ce que** les dérivés de métaux de transition mis en oeuvre sont des oxydes ou des dérivés qui libèrent de l'eau à la décomposition.

12. Procédé selon l'une des revendications 1 à 11, **caractérisé en ce que** les dérivés de métaux de transition ont une surface spécifique BET supérieure à 10 m²/g et de préférence supérieure à 50 m²/g.

13. Procédé selon la revendication 7, **caractérisé en ce que** les NOₓ libérés à la calcination sont convertis en acide nitrique qui est concentré et réutilisé pour dissolution de carbonate de lithium et/ou d'hydroxyde de lithium.
